**Europäisches Patentamt**

**European Patent Office**

**Office européen des brevets**

(11) Publication number: **0 166 238**
**B1**

# EUROPEAN PATENT SPECIFICATION

(45) Date of publication of patent specification: **03.08.88**

(21) Application number: **85106482.4**

(22) Date of filing: **25.05.85**

(51) Int. Cl.⁴: **A 23 L 2/34,** A 23 L 2/02,
A 23 C 9/133

(54) **Process for production of lactobacillus beverage.**

(30) Priority: **28.05.84 JP 108204/84**

(43) Date of publication of application:
**02.01.86 Bulletin 86/01**

(45) Publication of the grant of the patent:
**03.08.88 Bulletin 88/31**

(84) Designated Contracting States:
**DE GB**

(56) References cited:
**EP-A-0 113 055**
**CH-A- 567 373**

(73) Proprietor: **KIRIN BEER KABUSHIKI KAISHA**
**26-1 Jingumae 6-chome**
**Shibuya-ku Tokyo-To (JP)**

(72) Inventor: **Shinagawa, Kyoko**
**37-2, Hakoda-Machi**
**Maebashi-Shi Gunma-Ken (JP)**
Inventor: **Niwa, Motohiro**
**5-18, Nakai-Machi, 2-Chome**
**Takasaki-Shi Gunma-Ken (JP)**
Inventor: **Katayama, Hiroyuki**
**3439-78, Ishihara-Machi**
**Takasaki-Shi Gunma-Ken (JP)**

(74) Representative: **Reichel, Wolfgang, Dipl.-Ing.**
**et al**
**Reichel und Reichel Parkstrasse 13**
**D-6000 Frankfurt am Main 1 (DE)**

## Description

Background of the invention
Technical field

The present invention relates to processes for production of fruit juices containing lactobacilli. More particularly, the invention relates to processes for production of lactobacillus beverages characterized by the treatment of fruit juices for producing lactobacillus beverages of a high content of lactobacillus microorganisms from a wide variety of fruit juices.

In recent years, the effect of lactobacilli on health has been recognized anew, with emphasis coming to be imposed on the significance of positively ingesting lactobacilli through beverages and foods. The lactobacilli for beverages and foods are of the homofermentative.

From such a point of view, a lactobacillus beverage obtained by proliferation of a lactobacillus in a fruit juice may be stated to be a preferable one, because not only is it a source for supplying the lactobacillus, but also the fruit juice itself has its nutritional value.

However, while fruit juices have generally low pH values, there are only very limited species of lactobacilli proliferable in a fruit juice of a low pH value, and therefore it is commonly accepted that lactobacilli undergo almost no proliferation or are killed in a fruit juice. Particularly, proliferation of useful bacteria in the intestines such as *Lactobacillus casei* and *Lactobacillus acidophilus* in a fruit juice has been considerably difficult.

Accordingly, the only method of the prior art for proliferation of lactobacilli in a fruit juice was to elevate the pH value of the juice, and this method has been applied in one of the bioassays for detecting adulteration of a fruit juice. However, the method for proliferating lactobacilli by elevating the pH value of a fruit juice involves some drawbacks and is not suitable for utilization in the production of a beverage. For example, increasing the pH value of a fruit juice will increase the risk of contamination with miscellaneous bacteria, and sterilization treatment after increasing of the pH value will result in marked coloration (discoloration into brown) of the fruit juice and generation of a heat odor, whereby the flavor will be markedly impaired.

For the above reasons, a commercially available beverage comprising a combination of a fruit juice and a lactobacillus is prepared by proliferating the lactobacillus in an animal milk and adding the fruit juice thereto. However, the lactobacillus in such a milk beverage containing a fruit juice has a drawback in that the number of microorganisms will be reduced with the elapse of time because of some bacteriostatic components in the fruit juice, and therefore strict storage conditions (cooling and short storage time) must be met for maintenance of the microorganism number in the lactobacillus beverage.

Possible solution

In order to provide a solution to the above described problem, some of us have previously made a certain proposal (Japanese Patent Appln. No. 210206/1982). In accordance with this prior invention, a lactobacillus beverage endowed with hitherto incompatible properties, i.e., a lactobacillus beverage which comprises a product of lactic acid fermentation of a fruit juice containing substantially no milk component and has a content of a homofermentative lactobacillus microorganism of at least $10^6$/ml and a pH not exceeding 4.0, has been provided. The lactobacillus beverage according to this prior invention can be produced by bringing a fruit juice into contact with a treating agent selected from the group consisting of amide resins, diatomaceous earths, activated carbons and strongly basic anion-exchange resins which comprise resins having quaternary ammonium groups to remove bacteriostatic components in the fruit juice and then proliferating lactobacillus microorganisms in the thus treated fruit juice.

This prior invention is regarded as epoch-making in ensuring proliferation of a lactobacillus in an acidic fruit juice to a high content, and this technique would of course be more useful if a greater variety of treating agents could be applied to remove bacteriostatic components. A diatomaceous earth can effectively remove bacteriostatic components in orange and mandarin orange juices but is not effective enough to remove such components in grape, apple, grapefruit and strawberry juices. Consequently, there is an urgent need in the art for a greater variety of bacteriostatic component removing agents especially effective for these fruit juices.

Summary of the invention

An object of the present invention is to provide a solution to the above described problem, and to achieve this object by the use of a broader range of bacteriostatic component removing agents.

The process for producing a lactobacillus beverage according to the present invention in one aspect thereof comprises bringing a fruit juice having a pH of 4.5 or less into contact with a treating agent comprising a substance capable of bonding to or adsorbing polyphenols to remove bacteriostatic components in the fruit juice and adding a lactobacillus microorganism which has been proliferated separately to the thus treated fruit juice.

The process for producing a lactobacillus beverage according to the present invention in another aspect thereof comprises bringing a fruit juice having a pH of 4.5 or less into contact with a treating agent comprising a substance capable of bonding to or adsorbing polyphenols to remove bacteriostatic components in the fruit juice and proliferating a lactobacillus microorganism in the thus treated fruit juice in the presence of a milk component.

The process for producing a lactobacillus beverage according to the present invention in still another aspect thereof comprises bringing a fruit juice having a pH of 4.5 or less into contact with a treating agent comprising a substance which is capable of bonding to or adsorbing polyphenols and is other than an amide resin, a diatomaceous earth, an activated carbon, and a strongly basic anion-exchange resin which comprises a resin having quaternary ammonium groups to remove bacteriostatic components in the fruit juice and proliferating a lactobacillus microorganism in the thus treated fruit juice substantially in the absence of a milk component.

In accordance with the present invention in which a wider variety of bacteriostatic component removing agents can be used in comparison with the above described prior invention, it is possible to encourage proliferation of lactobacilli even in grape juice and the other juices mentioned previously in which a diatomaceous earth cannot effectively remove bacteriostatic components, thus ensuring production of a lactobacillus beverage of a high content of a lactobacillus microorganism.

Further, the present invention includes not only proliferation of a lactobacillus microorganism in a fruit juice from which bacteriostatic components have been removed but also addition of a lactobacillus microorganism which has been proliferated separately to a similarly treated fruit juice. In the latter case also, stability of the content of the lactobacillus added is advantageously attained as an indication of an intrinsic effect due to the removal of the bacteriostatic components.

Since the bacteriostatic components against lactobacillus microorganisms have been effectively removed in the process for producing a lactobacillus beverage according to the present invention as has been set forth hereinbefore, not only is it possible to produce a lactobacillus beverage of a high content of a lactobacillus microorganism, but also the lactobacillus beverage obtained can withstand storage for a long period: for example, when it is sealed in a glass bottle with shielding from light, no reduction in the number of living organisms is ordinarily observed even when it is left standing at 20°C for 50 days. More specifically, the lactobacillus beverage according to the present invention generally contains a lactobacillus in a number of $10^8$/ml, exceeding the number of lactobacillus $10^6$/ml required as the component standard for the lactobacillus in this kind of beverage with less than 3.0% of defatted milk solids, and no reduction in the number of living organisms can be seen in a bottled product thereof even when it is stored at room temperature for 50 days.

The lactobacillus beverage according to the present invention, which also belongs to the category of fruit juice beverages, is also improved in respect of undesirable "cooked flavor" which is a problem as off-flavor in fruit juice beverages.

Detailed description of the invention
Relationship to the prior invention

The prior invention, Japanese Patent Appln. No. 210206/1982, pertains to the lactobacillus beverage and the method for production thereof as mentioned previously.

The present invention, broadly speaking, relates to augmentation of the species of the treating agent applicable in the method for production of a lactobacillus beverage according to the prior invention. In the process of the present invention, unlike the method of the prior invention, the fruit juices in which lactobacilli are to be proliferated may or may not contain a milk component. Thus, in the case where the fruit juices to be treated in the instant process contain no milk component as in the prior invention and the lactobacilli are proliferated in the fruit juices, the treating agents to be used are other than those which are used in the prior invention, i.e., amide resins, diatomaceous earths, activated carbon and strongly basic anion-exchange resins which comprise resins having quaternary ammonium groups. The following description should therefore be understood on the basis of this background.

Fruit juice

Examples of fruit juices suitable for use in the present invention are those having pH values as low as 4.5 or less, preferably 3.0 to 4.0, particularly juices of citrus fruits such as grapefruit juice, orange juice and mandarin orange juice, apple juice, grape juice, strawberry juice, pineapple juice, blueberry juice, raspberry juice, and pear juice.

The pH of these fruit juices is, for example, about 3.6 or less for orange juice, about 3.6 or less for mandarin orange juice, about 3.7 or less for apple juice, 3.3 or less for grape juice, and 3.7 or less for strawberry juice.

The fruit juice content in the fruit juice preparations to which lactobacilli are to be added or which are to be subjected to lactic acid fermentation is generally 50 to 200% by weight.

The fruit juice to be provided for the treatment according to the present invention may be either one immediately after squeezing, containing pulp, or one from which pulp has been removed by such an operation as centrifugation. In view of convenience in the operation for treatment with a treating agent, it is preferred to use a fruit juice from which pulp has been removed.

Components which can be used in combination with the fruit juice when the content thereof is less than 100% may be any of those that will not hinder the growth of lactobacilli or lactic acid fermentation, one example of such components being milk. In an embodiment in which lactic acid fermentation is carried

3

out in the presence of a milk component, the milk component may of course be present in the fruit juice from the time when the juice is treated with a treating agent.

Treating agent

It is presumed that the treating agent to be used in the present invention renders the bacteriostatic components in a fruit juice harmless by adsorption or some other mechanism. However, the present invention is not bound by any such conjecture.

We have recently found that a treating agent capable of bonding to or adsorbing polyphenols has the property of removing bacteriostatic components.

The term "polyphenols" herein means phenol compounds having two or more phenolic hydroxyl groups in the same molecule. The phrase "capable of bonding to or adsorbing polyphenols" refers to the capability of significantly reducing the concentration of the polyphenols in the untreated fruit juice when the juice is treated with a treating agent under the prescribed conditions. The concentration of the polyphenols is herein measured in accordance with the conventional analytical method based on iron ion. (Particulars may be found in Analytica-EBC, 3rd. ed. (1975): E64.)

While the degree of the reduction in concentration of the polyphenols by virtue of the treatment should be high enough to substantiate the effect of the present invention as a matter of course, the particular value depends upon the species of the fruit juice to be treated as well as the species and quantity of the treating agent to be employed and therefore cannot be determined by a single factor. In the case, for example, where 2% by weight of a treating agent is added to red grape juice, the effect of the present invention can be achieved if about 25% or more of polyphenols in the juice are removed. (c.f. Example 1).

One group of the treating agent to be used in the present invention consists of an amide resin, a diatomaceous earth, an activated carbon, and a strongly basic anion-exchange resin which comprises a resin having quaternary ammonium groups.

The term "amide resin" herein means a solid resin having amide bonding in the main chain or the side chain thereof. More specifically, for example, polyamides and insolubilized polyvinyl pyrrolidones are suitable. Examples of polyamides are nylon® 6, nylon® 66, and nylon® 11. From the standpoint of availability, the former two are preferred. Insolubilized polyvinyl pyrrolidones are prepared by insolubilizing polyvinyl pyrrolidones which are natively soluble in water by heating.

The diatomaceous earth may be any one which can be used for treatment of foods. Typical examples are Celite® 503, Hi-Flow Super Cell®, and Filter Cell®. The diatomaceous earth seems to be particularly suitable for treatment of orange juice among various fruit juices.

Activated carbon may be any one which can be used for treatment of foods.

Anion-exchange resins may be any one which comprises a resin having quaternary ammonium groups. The resins having quaternary ammonium groups are preferably crosslinked polymers such as styrene-divinylbenzene copolymers. Examples of anion-exchange resins of this type are Dowex® 1 manufactured by Dow Chemical, U.S.A., and Amberlite IRA-402 manufactured by Rohm and Haas Co., U.S.A.

Another group of the treating agent suitable for use in the present invention consists of substances having the aforementioned property with respect to polyphenols except for the four species of treating agents enumerated hereinabove.

Examples of preferred treating agents which fall within this group are edible substances, i.e., foods or food additives. Some specific examples of such edible treating agents are proteins such as wheat protein, soybean protein, gelatin and casein, and protein-containing substances such as skim milk, while another example is a dietary fiber. The term "dietary fiber" herein means a difficulty digestible ingredient in food which cannot be digested with human digestive enzymes. ("Chemistry and Organisms", 18, 95 (1980)) Dietary fibers mainly comprising polysaccharides are preferred. Examples of the edible treating agents will be shown in the experimental examples set forth hereinlater.

These treating agents may be either liquid or solid. In the case of solid agents, those having a large surface area are preferred, and hence those in powdery or granular form are preferred.

Contact of treating agent with fruit juice

Contact between a treating agent and a fruit juice can be performed by any desired mode as long as its effect, that is, prevention of reduction of lactobacilli or proliferation thereof in a low pH fruit juice, can be recognized.

According to one mode, a treating agent is added to a fruit juice, which is then stirred. The amount of the treating agent, when it is solid, is ordinarily about 0.1 to 10%, preferably 0.2 to 5%, by weight of the fruit juice. By stirring the fruit juice at a temperature around room temperature for 10 to 40 minutes, the intended object can be accomplished. After the treatment, the fruit juice can be recovered by a conventional procedure such as filtration.

According to another mode for attaining contact, a fruit juice is passed through a layer of a powdery or granular solid agent. Filtration may be performed once or several times so that the contact time as mentioned above can be ensured at a temperature around room temperature.

Proliferation or addition of lactobacillus

The fruit juice treated as described above is now capable of proliferating a lactobacillus. Further, the lactobacillus content is maintained at a substantially constant level even after the elapse of time when a lactobacillus is added to the juice.

Proliferation of the lactobacillus in accordance with the present invention is essentially the same as that of the prior art except that it is conducted in a fruit juice which may or may not contain a milk component. Thus, the treated fruit juice (pH 4.5 or less) as described above is subjected to a sterilizing treatment (e.g., 90°C/1 minute), cooled, inoculated with an appropriate amount of the lactobacillus, and cultured at an appropriate temperature, for example, around 35°C, until the content of the lactobacillus becomes $10^6$/ml or more, that is, ordinarily for 0.5 to 3 days. Proliferation of the lactobacillus is accomplished in the present invention under acidic conditions, especially under acidic conditions intrinsically suitable for the particular fruit juice employed. Excessively acidic conditions, especially less than 3.4 pH conditions, do not seem to be desirable.

One mode of the process for producing a lactobacillus beverage according to the present invention comprises adding a lactobacillus which has been proliferated separately to a fruit juice from which bacteriostatic components have been removed. Typical lactobacilli which have been proliferated separately in this case are those which have been proliferated in milk, although a fruit juice from which bacteriostatic components have been removed may also be utilized for the proliferation.

The lactobacilli to be used in the present invention are homofermentative lactobacilli. Specific examples are those belonging to the genus *Lactobacillus* and lactic acid bacteria cocci such as those belonging to the genus *Streptococcus* and the genus *Pediococcus*. Among them, those belonging to the genus *Lactobacillus*, which are useful bacteria in the intestines, typically *L. casei*, *L. acidophilus* and *L. bulgaricus* are representative. Proliferability of lactobacillus seems to vary somewhat with the kind of the treating agent employed for treatment of the fruit juice. For example, of the three species of the genus *Lactobacillus* as mentioned above, the last one is better in proliferability in a fruit juice treated with an amide resin.

Post-treatment and utilization of the lactobacillus beverage produced

The lactobacillus beverage obtained as described above may be made into a final form for drinking with further addition, if necessary, of conventional additives for beverages such as sweetenings, flavorings, sourings, preservatives, and others, or by dilution, if necessary, with water, carbonated water, animal milk or fermented milk, or soybean milk.

The present invention concerns typically beverages useful as a source for supplying lactobacilli, and in such a case, the products after the step of proliferation of the lactobacilli can be placed aseptically in bottles or other containers as they are without sterilization. However, since there is also obtained the effect of improvement in flavor of fruit juices by treatment of the lactobacilli according to the present invention, the products after the step of proliferation of the lactobacilli (and sometimes after the treatment with yeast) can also be subjected to a low temperature sterilization, if only this effect of improvement in flavor is sought.

The fruit juices obtained by proliferation of the lactobacilli as described above can be further subjected to alcohol fermentation to provide alcoholic beverages. For example, if ordinary wine manufacturing steps are applied for grape juice subjected to the practice of the present invention, a wine of high quality can be obtained because the so-called malolactic fermentation with the lactobacilli occurs. Also, when fermentation is carried out moderately with the addition of a yeast to the lactobacillus beverage according to the present invention, it is possible to obtain a wine-like fermented beverage with an alcoholic content of less than 1.0%, which does not give off a diacetyl odor, which may sometimes be generated during lactic acid fermentation.

Experimental Examples

Example 1

To a respective one liter of red grape juice was added 20 g of each of the treating agents shown in Table 1. Each mixture was stirred for 30 minutes, and then filtered. The filtered juice was sterilized thermally at 90°C for one minute. After the juice was cooled to room temperature, 5 ml of a starter (number of microorganisms: $3.4 \times 10^8$/ml) having *Lactobacillus casei* IFO 12004 cultured in red grape juice similarly treated with skim milk as a treating agent was added thereto, and stationary cultivation was carried out at 35°C for 48 hours. The quantity of polyphenols in the treated juice was measured by utilizing the color reaction with iron ion. The number of lactobacillus microorganisms after the cultivation and the removal of polyphenols (%) are summarized in Table 1.

Example 2

To one liter of white grape juice, grapefruit juice, apple juice, strawberry juice and red grape juice, respectively, was added 20 g of each of the treating agents set forth in Table 2. Each mixture was stirred for 30 minutes, and thereafter filtered, sterilized and cooled as in Example 1. To each of the thus treated juices was added 5 ml of a starter having *Lactobacillus casei* IFO 12004 or *Lactobacillus acidophilus* IFO 3205 cultured in red grape juice similarly treated with skim milk as a treating agent, and stationary cultivation was carried out at 35°C for 48 hours. The number of lactobacillus microorganisms in each of the cultured juices was as shown in Table 2.

*Lactobacillus casei* IFO 12004 and *Lactobacillus acidophilus* IFO 3205 used in the examples of the present invention were supplied by the Institute for Fermentation, Osaka of 17-85 Juso-honmachi 2-chome, Yodogawa-ku, Osaka, 532, Japan, both of which are available to researchers upon request.

Example 3

To 50 liters of red grape juice was added 250 g of skim milk as a treating agent. The mixture was stirred for 10 minutes, and then filtered. The filtered juice was sterilized and cooled as in Example 1. To the juices thus treated was added 250 ml of a starter (number of microorganisms: $8.2 \times 10^9$/ml) similar to that used in Example 1, and stationary cultivation was carried out at 30°C for 24 hours. The cultured juice was found to contain $2.0 \times 10^9$/ml of microorganisms while having a ferment savour and a pleasant flavor. After this juice was charged aseptically into glass bottles and stored at 15°C for three months, no reduction in number of lactobacillus microorganisms was observed.

Example 4

To 10 liters of red grape juice was added 50 g of skim milk as a treating agent. The mixture was stirred for 30 minutes and then filtered, and further sterilized and cooled as in Example 1. To the resultant juice was added 100 ml of milk (number of microorganisms: $1.5 \times 10^9$/ml) fermented with a lactobacillus (*Lactobacillus casei* IFO 12004). The product thus obtained, even after it was charged aseptically into glass bottles and stored at 8°C for two weeks, maintained $1.1 \times 10^7$/ml of microorganisms (the same as the number at the initiation of the storage). In the case where skim milk was not added, the number of microorganisms was already reduced to $2 \times 10^3$/ml after one week's storage at 8°C.

Example 5

To 5 liters of red grape juice was added 75 g of sodium caseinate as a treating agent. The mixture was stirred for 15 minutes and subsequently filtered. To the filtered juice was added 16.5 g of a powdery milk product marketed as a food additive (milk powder controlled not to curdle in the juice and having 30% of a content of defatted milk solids), and the resultant juice was sterilized and cooled as in Example 1. To the juice thus treated was added 25 ml of a starter (number of microorganisms: $6.7 \times 10^8$/ml) similar to that used in Example 1, and stationary cultivation was carried out at 35°C for 48 hours. The cultured juice was found to contain $2.0 \times 10^8$/ml of microorganisms while having a ferment savour and a pleasant flavor.

Example 6

To one liter of red grape juice was added 10 g of insolubilized polyvinyl pyrrolidone. The mixture was stirred for 30 minutes and then filtered. To the filtered juice was added 3.3 g of a powdery milk product for use as a food additive similar to that employed in Example 5, and the resultant juice was sterilized and cooled as in Example 1. To the juice thus treated was added 5 ml of a starter (number of microorganisms: $2.2 \times 10^8$/ml) similar to that used in Example 1, and stationary cultivation was carried out at 35°C for 48 hours. The cultured juice was found to contain $9.4 \times 10^8$/ml of microorganisms while having a ferment savour and a pleasant flavor.

TABLE 1

Proliferability of lactobacilli in treated fruit juice and removal of polyphenols

| Treating agent | | No. of microorganisms after cultivation at 35°C for 48 hours (per ml) | Removal of polyphenols (%) | Remarks |
|---|---|---|---|---|
| | Untreated | $\leqq 10^3$ | 0 | |
| Protein | Skim milk | $6.5 \times 10^9$ | 58 | Proliferated to exceed the initial number $(5.1 \times 10^5$/ml) |
| | Wheat protein | $1.9 \times 10^9$ | 43 | |
| | Yeast extract | $6.0 \times 10^8$ | 42 | |
| | Diastase | $4.9 \times 10^9$ | 27 | |
| Dietary fiber (DF) | Beet DF | $6.6 \times 10^8$ | 72 | |
| | Spent grain | $3.7 \times 10^9$ | 58 | |
| | Wheat bran | $5.0 \times 10^9$ | 53 | |
| | Methyl cellulose | $8.0 \times 10^8$ | 37 | |
| | Corn DF | $7.0 \times 10^5$ | 33 | |

TABLE 2
Proliferability of lactobacilli in treated fruit juice

| Fruit juice | Treating agent | Lactobacillus species | No. of microorganisms after cultivation at 35°C for 48 hours (per ml) | Initial number of microorganisms (per ml) |
|---|---|---|---|---|
| White grape | Casein<br>Sodium caseinate<br>Skim milk | *L. casei*<br>"<br>" | $1.2 \times 10^8$<br>$3.0 \times 10^8$<br>$1.7 \times 10^9$ | $5.0 \times 10^5$ |
| Grapefruit | None<br>Wheat protein<br>Skim milk | "<br>"<br>" | $4.8 \times 10^4$<br>$3.5 \times 10^8$<br>$9.9 \times 10^8$ | |
| Apple | None<br>Wheat protein<br>Skim milk | "<br>"<br>" | $7.8 \times 10^4$<br>$1.5 \times 10^8$<br>$4.2 \times 10^9$ | |
| Strawberry | None<br>Wheat protein<br>Skim milk | "<br>"<br>" | $1.0 \times 10^5$<br>$7.0 \times 10^8$<br>$2.5 \times 10^9$ | |
| Red grape | None<br>Wheat protein<br>Skim milk | *L. acidophilus*<br>"<br>" | $10^1$ or less<br>$1.5 \times 10^9$<br>$3.5 \times 10^8$ | $1.5 \times 10^3$ |
| | Sodium caseinate | *L. casei* | $2.5 \times 10^8$ | $1.1 \times 10^6$ |
| | Soybean protein<br>Gelatin<br>Egg albumin<br>Dry yeast<br>Papain | "<br>"<br>"<br>"<br>" | $3.7 \times 10^8$<br>$5.4 \times 10^8$<br>$2.0 \times 10^8$<br>$2.8 \times 10^7$<br>$6.6 \times 10^8$ | $6.0 \times 10^6$ |
| | Poly-L-proline<br>Enzymolyzate of casein | "<br>" | $2.1 \times 10^9$<br>$3.2 \times 10^9$ | $6.0 \times 10^5$ |

**Claims**

1. A process for producing a lactobacillus beverage, which comprises bringing a fruit juice having a pH of 4.5 or less into contact with a treating agent comprising a substance capable of bonding to or adsorbing polyphenols to remove bacteriostatic components in the fruit juice and adding to the thus treated fruit juice a lactobacillus microorganism which has been proliferated separately.

2. A process according to claim 1, wherein the separately proliferated lactobacillus has been proliferated in milk.

3. A process for producing a lactobacillus beverage, which comprises bringing a fruit juice having a pH of 4.5 or less into contact with a treating agent comprising a substance capable of bonding to or adsorbing polyphenols to remove bacteriostatic components in the fruit juice and proliferating a lactobacillus microorganism in the thus treated fruit juice in the presence of a milk component.

4. A process for producing a lactobacillus beverage, which comprises bringing a fruit juice having a pH of 4.5 or less into contact with a treating agent comprising a substance capable of bonding to or adsorbing polyphenols, said treating agent being exclusive of an amide resin, a diatomaceous earth, an activated carbon, and a strongly basic anion-exchange resin which comprises a resin having quaternary ammonium groups, thereby to remove bacteriostatic components in the fruit juice and proliferating a lactobacillus microorganism in the thus treated fruit juice substantially in the absence of a milk component.

5. A process according to claim 1 or 3, wherein the treating agent is a member selected from the group consisting of an amide resin, a diatomaceous earth, an activated carbon, or a strongly basic anion-exchange resin, which comprises a resin having quaternary ammonium groups.

6. A process according to claims 1, 3 or 4, wherein the treating agent is edible.

7. A process according to claim 6, wherein the treating agent is a protein or a dietary fiber.

8. A process according to claims 1, 3 or 4, wherein the lactobacillus beverage to be produced has a content of a homofermentative lactobacillus microorganism of at least $10^6$/ml and a pH of 4.5 and less.

# 0 166 238

## Patentansprüche

1. Verfahren zur Herstellung eines Lactobazillus-Getränks, dadurch gekennzeichnet, daß man einen Fruchtsaft mit einem pH-Wert von 4,5 oder darunter zur Entfernung von im Fruchtsaft vorhandenen bakteriostatischen Komponenten mit einem Behandlungsmittel in Berührung bringt, das eine zur Bindung oder Adsorption von Polyphenolen befähigte Substanz enthält, und den so behandelten Fruchtsaft mit einem Lactobazillus-Mikroorganismus versetzt, der getrennt davon vermehrt worden ist.

2. Verfahren gemäß Anspruch 1, dadurch gekennzeichnet, daß der getrennt vermehrte Lactobazillus in Milch vermehrt worden ist.

3. Verfahren zur Herstellung eines Lactobazillus-Getränks, dadurch gekennzeichnet, daß man einen Fruchtsaft mit einem pH-Wert von 4,5 oder darunter zur Entfernung bakteriostatischer Komponenten im Fruchtsaft mit einem Behandlungsmittel in Berührung bringt, das eine zum Binden oder Adsorbieren von Polyphenolen befähigte Substanz enthält, und einen Lactobazillus-Mikroorganismus in dem so behandelten Fruchtsaft in Gegenwart eines Milchbestandteils vermehrt.

4. Verfahren zur Herstellung eines Lactobazillus-Getränks, dadurch gekennzeichnet, daß man einen Fruchtsaft mit einem pH-Wert von 4,5 oder darunter zur Entfernung bakteriostatischer Komponenten in dem Fruchtsaft mit einem Behandlungsmittel, das eine zum Binden oder Adsorbieren von Polyphenolen befähigte Substanz enthält, in Berührung bringt, ausgenommen mit einem Amidharz, einer Diatomenerde, einer Aktivkohle oder einem stark basischen Anionenaustauscherharz, enthaltend ein Harz mit quartären Ammoniumgruppen, und einen Lactobazillus-Mikroorganismus in dem so behandelten Fruchtsaft im wesentlichen in Abwesenheit eines Milchbestandteils vermehrt.

5. Verfahren gemäß Anspruch 1 oder 3, dadurch gekennzeichnet, daß das Behandlungsmittel aus der Gruppe der Amidharze, der Diatomenerden, der Aktivkohlen oder der stark basischen Anionenaustauscherharze, enthaltend ein Harz mit quartären Ammoniumgruppen, ausgewählt ist.

6. Verfahren gemäß Anspruch 1, 3 oder 4, dadurch gekennzeichnet, daß das Behandlungsmittel eßbar ist.

7. Verfahren gemäß Anspruch 6, dadurch gekennzeichnet, daß das Behandlungsmittel ein Protein oder ein faserförmiger Ballaststoff ist.

8. Verfahren gemäß Anspruch 1, 3 oder 4, dadurch gekennzeichnet, daß das zu erzeugende Lactobazillus-Getränk einen Gehalt an einem homofermentativen Lactobazillus-Mikroorganismus von mindestens $10^6$ Mikroorganismen/ml sowie einen pH-Wert von 4,5 oder darunter aufweist.

## Revendications

1. Procédé de préparation d'une boisson à lactobacille, qui comprend la mise en contact d'un jus de fruit d'un pH de 4,5 ou moins avec un agent de traitement comprenant une substance capable de se lier aux polyphénols ou d'adsorber ceux-ci afin d'enlever les composants bactériostatiques existant dans le jus de fruit, et l'addition au jus de fruit ainsi traité, d'un micro-organisme lactobacille qui a été amené à proliférer séparément.

2. Procédé suivant la revendication 1, caractérisé en ce que le lactobacille qui a été amené à proliférer séparément a subi la prolifération dans du lait.

3. Procédé de préparation d'une boisson à lactobacille, qui comprend la mise en contact d'un jus de fruit d'un pH de 4,5 ou moins avec un agent de traitement comprenant une substance capable de se lier aux polyphénols ou d'adsorber ceux-ci afin de séparer les composants bactériostatiques existant dans le jus de fruit, et la prolifération d'un micro-organisme lactobacille dans le jus de fruit ainsi traité en présence d'un composant du lait.

4. Procédé de préparation d'une boisson à lactobacille, qui comprend la mise en contact d'un jus de fruit d'un pH de 4,5 ou moins avec un agent de traitement comprenant une substance capable de se lier aux polyphénols ou d'adsorber ceux-ci, cet agent de traitement n'étant pas une résine d'amide, une terre à diatomées, un charbon activé et une résine échangeuse d'anions fortement basique, englobant une résine comportant des groupes d'ammonium quaternaires, de manière à séparer ainsi les composants bactériostatiques du jus de fruit, et la prolifération d'un micro-organisme lactobacille dans le jus de fruit ainsi traité, pratiquement en l'absence d'un composant du lait.

5. Procédé suivant la revendication 1 ou 3, caractérisé en ce que l'agent de traitement est un membre du groupe comprenant une résine d'amide, une terre à diatomées, un charbon activé ou une résine échangeuse d'anions fortement basique, englobant une résine comportant des groupes d'ammonium quaternaires.

6. Procédé suivant l'une quelconque des revendications 1, 3 ou 4, caractérisé en ce que l'agent de traitement est comestible.

7. Procédé suivant la revendication 6, caractérisé en ce que l'agent de traitement est une protéine ou une fibre alimentaire.

8. Procédé suivant l'une quelconque des revendications 1, 3 ou 4, caractérisé en ce que la boisson à lactobacille à produire a une teneur en micro-organisme lactobacille homofermentatif d'au moins $10^6$/ml et un pH de 4,5 ou moins.

8